# EUROPÄISCHE PATENTANMELDUNG

(11) **EP 0 892 581 A2**
(43) Veröffentlichungstag der Anmeldung: **20.01.1999**
(21) Anmeldenummer: 98440154.7
(22) Anmeldetag: 16.07.1998
(51) Int. Cl.: H04Q 11/04

(54) **Verfahren zum Übertragen von Daten auf einer ISDN-Anschlussleitung, sowie Leitungsabschlusseinheit, Vermittlungsstelle, Netzabschlusseinheit und Datenendgerät dafür**

(30) Priorität: 17.07.1997 DE 19730621
(71) Anmelder: Alcatel Alsthom Compagnie Generale d'Electricité, 75088 Paris (FR)
(72) Erfinder: Weiss, Waldemar, Dr., 74343 Sachsenheim (DE)
(74) Vertreter: Brose, Gerhard, Dipl.-Ing.

(57) **Zusammenfassung**

Die Erfindung betrifft ein Verfahren zum Übertragen von Daten auf einer ISDN-Anschlußleitung mit einem Datenkanal (D16) und zwei oder mehr für Sprache oder Daten geeigneten Kanälen (B64) unter Verwendung des Datenkanals, bei dem bei jedem Verbindungswunsch zunächst geprüft wird, ob die gewünschte Verbindung als Datenverbindung aufgebaut werden kann oder soll, daß diese Verbindung über den Datenkanal (D16) aufgebaut wird, daß geprüft wird, ob noch ein für Sprache oder Daten geeigneter Kanal (B64) frei ist, daß die Kapazität dieses Kanals zur Verbindung über den Datenkanal (D16) hinzugenommen wird, daß laufend überwacht wird, ob ein für Sprache oder Daten geeigneter und durch die Datenverbindung belegter Kanal (B64) für eine andere Verbindung angefordert wird oder ob ein bisher für eine andere Verbindung gebrauchter solcher Kanal nicht mehr dafür gebraucht wird, daß ein von einer anderen Verbindung angeforderter für Sprache oder Daten geeigneter und durch die Datenverbindung belegter Kanal (B64) für die angeforderte Verbindung freigegeben wird, daß die Kapazität eines nicht mehr durch eine andere Verbindung gebrauchten Kanals zur Datenverbindung hinzugenommen wird und daß zur Übertragung von Daten in der Datenverbindung jeweils die ganze insgesamt zur Verfügung stehende Kapazität verwendet wird, sowie eine Leitungsabschlußeinheit für eine Vermittlungsstelle, eine Vermittlungsstelle mit einer Leitungsabschlußeinheit, eine Netzabschlußeinheit für ein Datenendgerät und ein Datenendgerät mit einer Netzabschlußeinheit.

## Beschreibung

Die Erfindung betrifft ein Verfahren zum Übertragen von Daten auf einer ISDN-Anschlußleitung mit einem Datenkanal und zwei oder mehr für Sprache oder Daten geeigneten Kanälen unter Verwendung des Datenkanals, nach dem Oberbegriff des Anspruchs 1, eine Leitungsabschlußeinheit für eine Vermittlungsstelle, mit Einrichtungen zum Anschluß mindestens einer ISDN-Anschlußleitung, nach dem Oberbegriff des Anspruchs 2, eine Vermittlungsstelle mit einer Leitungsabschlußeinheit, mit Einrichtungen zum Anschluß mindestens einer ISDN-Anschlußleitung, nach dem Oberbegriff des Anspruchs 3, eine Netzabschlußeinheit für ein Datenendgerät, zum Anschluß an eine ISDN-Anschlußleitung, nach dem Oberbegriff des Anspruchs 4 und ein Datenendgerät mit einer Netzabschlußeinheit zum Anschluß an eine ISDN-Anschlußleitung nach dem Oberbegriff des Anspruchs 5.

Heutige ISDN-Anschlußleitungen weisen entweder einen Datenkanal für 16 kbit/s, den sogenannten D-Kanal, und zwei sowohl für Sprache als auch für Daten geeignete Kanäle für 64 kbit/s, die sogenannten B-Kanäle auf oder sie weisen einen Datenkanal für 64 kbit/s und 30 sowohl für Sprache als auch für Daten geeignete Kanäle für 64 kbit/s auf. Die Anschlüsse werden dann als Basisanschluß bzw. als Primärmultiplexanschluß bezeichnet, wobei die D-Kanäle dann auch als D16- bzw. D64-Kanäle bezeichnet werden. Entsprechend werden die B-Kanäle manchmal auch als B64-Kanäle bezeichnet. Für die beiden genannten Fälle sind auch die Abkürzungen 2B+D bzw. 30B+D bekannt.

Die D-Kanäle dienen primär der Signalisierung zwischen Vermittlungsstelle und Teilnehmerendgerät oder Nebenstellenanlage. Von einem D-Kanal nicht benutzte Kapazität kann auch für Datenverbindungen genutzt werden.

Für Datenverbindungen besteht deshalb die Möglichkeit, diese entweder mit über den D-Kanal zu führen oder einen oder auch mehrere B-Kanäle hierfür zu verwenden. Die Inhalte der Datenverbindungen,die auf den Anschlußleitungen in D-Kanälen geführt werden, werden im Netz mit anderen Datenverbindungen zusammengefaßt und über B-Kanäle oder über ein separates Datennetz geführt.

Gerade diejenigen Datenverbindungen, die üblicherweise in D-Kanälen geführt werden, weisen meist burstartigen Charakter auf, d.h., daß gelegentlich kurzfristig ein größeres Datenaufkommen auftritt, während dazwischen entweder gar kein oder nur sehr wenig Datenaufkommen herrscht. Werden diese Datenverbindungen nun tatsächlich im D-Kanal geführt, so ist dieser zwar hierfür insgesamt ausreichend, trotzdem können gelegentlich für den Benutzer unangenehme Wartezeiten auftreten. Wird eine solche Datenverbindung dagegen in einem B-Kanal geführt, so treten zwar für den Benutzer nur noch deutlich geringere Wartezeiten auf, jedoch ist dieser Kanal insgesamt unwirtschaftlich ausgenützt und für andere Aufgaben blockiert.

Allerdings gibt es auch andere Datenverbindungen, insbesondere solche, die zeitkritisch sind und auf eine Übertragung in einem B-Kanal zugeschnitten sind, für die diese Überlegungen nicht zutreffen und die auf jeden Fall in einem B-Kanal laufen müssen. In der Regel wird dies von demjenigen Teilnehmer vorgegeben, von dem der Verbindungswunsch ausgeht.

Der Erfindung liegt die Aufgabe zugrunde, für Datenverbindungen, die nicht aus anderen Gründen über einen B-Kanal geführt werden müssen, eine effektivere Ausnutzung einer Anschlußleitung zu ermöglichen.

Diese Aufgabe wird erfindungsgemäß gelöst durch ein Verfahren nach der Lehre des Anspruchs 1, eine Leitungsabschlußeinheit nach der Lehre des Anspruchs 2, eine Vermittlungsstelle nach der Lehre des Anspruchs 3, eine Netzabschlußeinheit nach der Lehre des Anspruchs 4 und ein Datenendgerät nach der Lehre des Anspruchs 5.

Damit erfolgt der Datenverkehr, soweit zulässig, grundsätzlich im D-Kanal; die Kapazität eines B-Kanals (oder auch mehrerer) wird aber solange mitbenutzt, solange dieser nicht als solcher belegt ist. Der Datenverkehr selbst erfolgt protokollmäßig als D-Kanal-Verbindung.

Weitere Ausgestaltungen der Erfindung sind den Unteransprüchen und der nachfolgenden Beschreibung zu entnehmen.

Im folgenden wird die Erfindung anhand eines Ausführungsbeispiels unter Zuhilfenahme der beiliegenden Zeichnungen weiter erläutert:

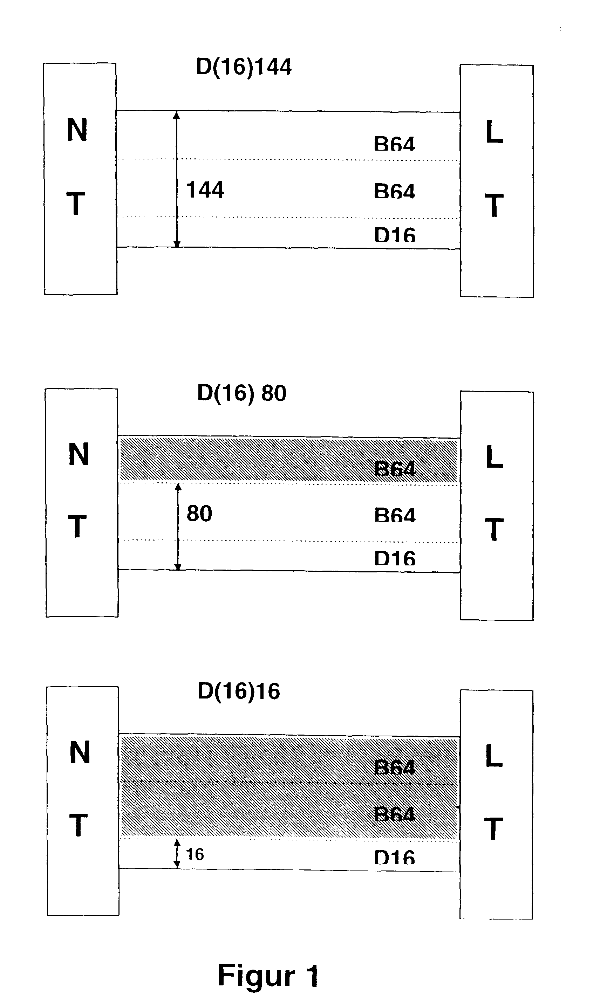

- Figur 1: zeigt eine erfindungsgemäße Netzabschlußeinheit und eine erfindungsgemäße Leitungsabschlußeinheit in drei verschiedenen Betriebssituationen, die sich bei der Durchführung des erfindungsgemäßen Verfahrens ergeben.

Figur 1 zeigt in drei untereinander angeordneten, insoweit untereinander gleichen Darstellungen eine Netzabschlußeinheit NT (Network Termination), eine Leitungsabschlußeinheit LT (Line Termination) und eine dazwischen befindliche ISDN-Anschlußleitung. Die Anschlußleitung ist hier durch die darin geführten Übertragungskanäle dargestellt.

Die Netzabschlußeinheit NT befindet sich auf der Teilnehmerseite der Anschlußleitung, die Leitungsabschlußeinheit LT auf der Vermittlungsseite. Die Netzabschlußeinheit NT ist technisch gesehen ein Teil eines Datenendgerätes. Aus verschiedenen Gründen, unter anderem auch aus organisatorischen Gründen, ist die Netzabschlußeinheit NT in der Regel vom Datenendgerät getrennt. Unabhängig von der tatsächlichen Aufteilung der für die Durchführung des erfindungsgemäßen Verfahrens erforderlichen Mittel auf Netzabschlußeinheit und Datenendgerät wird hier nur die Netzabschlußeinheit gezeigt. Entsprechendes gilt für die Leitungsabschlußeinheit LT, die mehr oder weniger mit einer Vermittlungsstelle baulich vereinigt sein kann.

Die Übertragungsleitung ist hier, wie erwähnt, durch die darin enthaltenen Übertragungskanäle dargestellt. In diesem Fall ist ein Basisanschluß mit zwei B-Kanälen B64 und einem D-Kanal D16 gezeigt. Nicht berücksichtigt ist, wie üblich, die Tatsache, daß der D-Kanal in einen Kanal mit 64 kbit/s eingebettet ist. Die restliche Kapazität jedenfalls ist für Nutzzwecke nicht verfügbar. (Auch der D-Kanal selbst ist wegen der Signalisierung zwischen Vermittlungsstelle und Teilnehmerendgerät oder Nebenstellenanlage nicht ganz für Nutzzwecke verfügbar). Ebenfalls nicht dargestellt ist die Tatsache, daß für beide Richtungen dieselben Gesichtspunkte gelten. Selbstverständlich ist das erfindungsgemäße Verfahren für beide Richtungen unabhängig voneinander anwendbar.

Zunächst wird angenommen, daß über diese Anschlußleitung keine Verbindung geführt wird. Wird nun von einer der beiden Seiten eine Verbindung gewünscht, die entweder erkennbar von der Art her grundsätzlich im D-Kanal geführt werden kann oder ausdrücklich so geführt werden soll, so wird die Leitungsabschlußeinheit LT darüber per Signalisierung informiert. Diese stellt nun, zusammen mit der Netzabschlußeinheit NT, sowohl die Kapazität des D-Kanals als auch die der zwei B-Kanäle für diese Verbindung zur Verfügung. Protokollmäßig ist die ganze Verbindung aber eine D-Kanal-Verbindung, die jetzt, abgesehen von der weiterhin im eigentlichen D-Kanal ablaufenden Signalisierung, insgesamt 144 kbit/s zur Verfügung hat. Dies wird hier mit der Bezeichnung D(16)144 zum Ausdruck gebracht und insoweit in der ersten Zeile von Figur 1 dargestellt.

Wird nun beispielsweise noch der Wunsch nach einer Sprachverbindung signalisiert, so geht dieser Wunsch vor und es muß die Kapazität eines B-Kanals hierfür freigegeben werden. Der D-Kanal reduziert sich dann auf einen Kanal mit bis zu (Signalisierung) 80 kbit/s. Er ist in der zweiten Zeile von Figur 1 dargestellt und als D(16)80 bezeichnet.

Wird ein weiterer B-Kanal angefordert, so muß auch die Kapazität hierfür freigegeben werden und es bleibt nur noch der eigentliche D-Kanal übrig, wie in der dritten Zeile von Figur 1 als D(16)16 dargestellt.

Wird nun einer der B-Kanäle nicht mehr als solcher benutzt, so wird dessen Kapazität wieder dem D-Kanal zugeschlagen

Das gleiche gilt natürlich auch, wenn bei der Anforderung eines D-Kanals bereits ein B-Kanal belegt war oder wenn der D Kanal zunächst nur mit seiner Minimalkapazität belegt werden kann. Jedenfalls wird zu jedem Zeitpunkt die gesamte nicht für B-Kanäle benötigte Kapazität der Anschlußleitung dem D-Kanal zugeschlagen.

Gebührenmäßig braucht die höhere zur Verfügung gestellte Kapazität nicht berücksichtigt zu werden, weil sie auf der Anschlußleitung ohnehin sonst nicht verwendbar ist. Sofern im weiterführenden Netz die Datenverbindung als Paketverbindung geführt wird, kommt es dort primär auf die insgesamt übertragene Datenmenge und nur sekundär auf deren zeitliche Verteilung an. Allerdings ist zu berücksichtigen, daß das Datennetz auf diese Weise noch stärker burstartig belastet werden kann.

Im Falle eines Primärmultiplexanschlusses, beispielsweise für eine Nebenstellenanlage, kann der D-Kanal, der dann ein D64-Kanal ist, auch mehrere Datenverbindungen, die von mehreren D16-Kanälen herrühren, gleichzeitig führen. Auch in diesem Fall ist es sinnvoll und möglich, die Kapazität nicht benutzter B-Kanäle zu diesem D-Kanal hinzuzunehmen. Die Aufteilung der insgesamt verfügbaren Kapazität auf die einzelnen Datenverbindungen erfolgt dann aber prinzipiell gleich wie die Aufteilung der Kapazität des nicht in seiner Kapazität erweiterten D-Kanals.

Da die Weiterführung der Datenverbindungen im Netz ohnehin anders ist als auf der Anschlußleitung, ist es auch nicht zwingend, daß beide Anschlußleitungen zweier miteinander eine Datenverbindung führender Partner gleich ausgeführt sind. Es ist durchaus möglich, daß eine solche Verbindung am einen Ende erfindungsgemäß über einen erweiterten D-Kanal geführt wird, während sie am anderen Ende über einen B-Kanal geführt wird. Am anderen Ende kann dann allerdings die Kapazität nicht freigegeben werden, auch wenn sie augenblicklich nicht benötigt wird.

Durch die Beschreibung des Verfahrens ergeben sich die Mittel zur Durchführung des Verfahrens für den Fachmann von selbst. Die Aufteilung auf Vermittlungsstelle und Leitungsabschlußeinheit einerseits sowie Datenendgerät und Netzabschlußeinheit andererseits dagegen ist aus technischer Sicht ohnehin beliebig.

## Patentansprüche

1. Verfahren zum Übertragen von Daten auf einer ISDN-Anschlußleitung mit einem Datenkanal (D16) und zwei oder mehr für Sprache oder Daten geeigneten Kanälen (B64) unter Verwendung des Datenkanals, **dadurch gekennzeichnet, daß** bei jedem Verbindungswunsch zunächst geprüft wird, ob die gewünschte Verbindung als Datenverbindung aufgebaut werden kann oder soll, daß diese Verbindung über den Datenkanal (D16) aufgebaut wird, daß geprüft wird, ob noch ein für Sprache oder Daten geeigneter Kanal (B64) frei ist, daß die Kapazität dieses Kanals zur Verbindung über den Datenkanal (D16) hinzugenommen wird, daß laufend überwacht wird, ob ein für Sprache oder Daten geeigneter und durch die Datenverbindung belegter Kanal (B64) für eine andere Verbindung angefordert wird oder ob ein bisher für eine andere Verbindung gebrauchter solcher Kanal nicht mehr dafür gebraucht wird, daß ein von einer anderen Verbindung angeforderter für Sprache oder Daten geeigneter und durch die Datenverbindung belegter Kanal (B64) für die angeforderte Verbindung freigegeben wird, daß die Kapazität eines nicht mehr durch eine andere Verbindung gebrauchten Kanals zur Datenverbindung hinzugenommen wird und daß zur Übertragung von Daten in der Datenverbindung jeweils die ganze insgesamt zur Verfügung stehende Kapazität verwendet wird.

2. Leitungsabschlußeinheit (LT) für eine Vermittlungsstelle, mit Einrichtungen zum Anschluß mindestens einer ISDN-Anschlußleitung mit einem Datenkanal (D16) und zwei oder mehr für Sprache oder Daten geeigneten Kanälen (B64), **dadurch gekennzeichnet,** daß die Leitungsabschlußeinheit Mittel aufweist, um bei jedem Verbindungswunsch zunächst zu prüfen, ob die gewünschte Verbindung als Datenverbindung aufgebaut werden kann oder soll, um diese Verbindung über den Datenkanal (D16) aufzubauen, um zu prüfen, ob noch ein für Sprache oder Daten geeigneter Kanal (B64) frei ist, um die Kapazität dieses Kanals zur Verbindung über den Datenkanal (D16) hinzuzunehmen, um laufend zu überwachen, ob ein für Sprache oder Daten geeigneter und durch die Datenverbindung belegter Kanal (B64) für eine andere Verbindung angefordert wird oder ob ein bisher für eine andere Verbindung gebrauchter solcher Kanal nicht mehr dafür gebraucht wird, um einen von einer anderen Verbindung angeforderten für Sprache oder Daten geeigneten und durch die Datenverbindung belegten Kanal (B64) für die angeforderte Verbindung freizugeben, um die Kapazität eines nicht mehr durch eine andere Verbindung gebrauchten Kanals zur Datenverbindung hinzuzunehmen und um zur Übertragung von Daten in der Datenverbindung jeweils die ganze insgesamt zur Verfügung stehende Kapazität zu verwenden.

3. Vermittlungsstelle mit einer Leitungsabschlußeinheit (LT) mit Einrichtungen zum Anschluß mindestens einer ISDN-Anschlußleitung mit einem Datenkanal (D16) und zwei oder mehr für Sprache oder Daten geeigneten Kanälen (B64), **dadurch gekennzeichnet, daß** die Leitungsabschlußeinheit Mittel aufweist, um bei jedem Verbindungswunsch zunächst zu prüfen, ob die gewünschte Verbindung als Datenverbindung aufgebaut werden kann oder soll, um diese Verbindung über den Datenkanal (D16) aufzubauen, um zu prüfen, ob noch ein für Sprache oder Daten geeigneter Kanal (B64) frei ist, um die Kapazität dieses Kanals zur Verbindung über den Datenkanal (D16) hinzuzunehmen, um laufend zu überwachen, ob ein für Sprache oder Daten geeigneter und durch die Datenverbindung belegter Kanal (B64) für eine andere Verbindung angefordert wird oder ob ein bisher für eine andere Verbindung gebrauchter solcher Kanal nicht mehr dafür gebraucht wird, um einen von einer anderen Verbindung angeforderten für Sprache oder Daten geeigneten und durch die Datenverbindung belegten Kanal (B64) für die angeforderte Verbindung freizugeben, um die Kapazität eines nicht mehr durch eine andere Verbindung gebrauchten Kanals zur Datenverbindung hinzuzunehmen und um zur Übertragung von Daten in der Datenverbindung jeweils die ganze insgesamt zur Verfügung stehende Kapazität zu verwenden.

4. Netzabschlußeinheit (NT) für ein Datenendgerät, zum Anschluß an eine ISDN-Anschlußleitung mit einem Datenkanal (D16) und zwei oder mehr für Sprache oder Daten geeigneten Kanälen (B64), **dadurch gekennzeichnet, daß** die Netzabschlußeinheit Mittel aufweist, um eine gewünschte Verbindung über den Datenkanal (D16) aufzubauen, um die Kapazität eines weiteren Kanals zur Verbindung über den Datenkanal (D16) hinzuzunehmen, um einen von einer anderen Verbindung angeforderten für Sprache oder Daten geeigneten und durch die Datenverbindung belegten Kanal (B64) für die angeforderte Verbindung freizugeben, um die Kapazität eines nicht mehr durch eine andere Verbindung gebrauchten Kanals zur Datenverbindung hinzuzunehmen und um zur Übertragung von Daten in der Datenverbindung jeweils die ganze insgesamt zur Verfügung stehende Kapazität zu verwenden.

5. Datenendgerät mit einer Netzabschlußeinheit (NT), zum Anschluß an eine ISDN-Anschlußleitung mit einem Datenkanal (D16) und zwei oder mehr für Sprache oder Daten geeigneten Kanälen (B64), **dadurch gekennzeichnet, daß** die Netzabschlußeinheit Mittel aufweist, um eine gewünschte Verbindung über den Datenkanal (D16) aufzubauen, um die Kapazität eines weiteren Kanals zur Verbindung über den Datenkanal (D16) hinzuzunehmen, um einen von einer anderen Verbindung angeforderten für Sprache oder Daten geeigneten und durch die Datenverbindung belegten Kanal (B64) für die angeforderte Verbindung freizugeben, um die Kapazität eines nicht mehr durch eine andere Verbindung gebrauchten Kanals zur Datenverbindung hinzuzunehmen und um zur Übertragung von Daten in der Datenverbindung jeweils die ganze insgesamt zur Verfügung stehende Kapazität zu verwenden.
